# FASCICULE DE BREVET EUROPEEN

(11) **EP 1 702 082 B1**
(45) Date de publication et mention de la délivrance du brevet: **24.07.2013**
(21) Numéro de dépôt: 05717382.5
(22) Date de dépôt: 07.01.2005
(51) Int. Cl.: C22C 26/00, B22F 3/17, B24D 3/08, C22C 1/05

(54) **PROCEDE DE FABRICATION DE SEGMENTS DIAMANTES POUR DES OUTILS DE COUPE**
VERFAHREN ZUR HERSTELLUNG VON DIAMANTSEGMENTEN FÜR SCHNEIDWERKZEUGE
METHOD OF PRODUCING DIAMOND SEGMENTS FOR CUTTING TOOLS

(30) Priorité: 09.01.2004 FR 0400171
(43) Date de publication de la demande: 20.09.2006
(73) Titulaire: WA S.A.S., 38570 Le Cheylas (FR)
(72) Inventeur: FALLYER, Emmanuel, 85500 Chambretaud (FR)
(74) Mandataire: Hecké, Gérard
(86) Numéro de dépôt international: PCT/FR2005/000035
(87) Numéro de publication internationale: WO 2005/073417

(56) Documents cités:
- CH-A- 471 641
- DE-A- 3 308 409
- FR-A- 1 438 728

## Description

### Domaine technique de l'invention

L'invention concerne un procédé de fabrication par frittage d'un segment diamanté pour un outil de coupe, consistant à assurer successivement :
- un mélange de poudres métalliques avec des particules de diamant,
- un préformage par compression à froid du mélange pour obtenir une préforme manipulable,
- un préfrittage à chaud de la préforme pour éliminer les résidus de compactage, et désoxyder la préforme tout en assurant un début de frittage.

### État de la technique

La fabrication des segments diamantés d'outils de coupe est basée sur la métallurgie des poudres, qui consiste à consolider, par effet thermique et mécanique, des poudres métalliques de composition prédéterminée avec des grains de diamant naturel ou synthétique. Le produit obtenu est un corps en métal fritté ayant des caractéristiques dépendant de la nature des poudres métalliques de base et des conditions de frittage.

Les différentes techniques couramment utilisées, pour la fabrication des segments diamantés, sont les suivantes :
- frittage libre : la consolidation est effectuée dans un four sous atmosphère neutre ou réductrice sans apport d'énergie mécanique,
- frittage sous charge : la consolidation est effectuée dans un four sous atmosphère neutre ou réductrice avec apport d'énergie supplémentaire par pression (gaz ou mécanique).

La technique de frittage libre s'effectue à une température comprise entre 900°C et 1200°C, et à la pression atmosphérique. Le temps de cycles de fabrication est assez long (quelques heures), et la compacité obtenue pour le matériau fritté est de l'ordre de 92% à 95%. La porosité résiduelle des pièces après frittage risque alors de dégrader la résistance mécanique du matériau fritté et du diamant. En effet, la thermostabilité du diamant est très nettement affectée dès lors que la température à pression faible dépasse 1000°C.

La technique de frittage sous charge mécanique s'effectue à une température comprise entre 700°C et 1200°C, et à une pression de 250 à 400 bars (25 à 40 MPA). Le temps de cycle est de l'ordre de 15mn, et la compacité est comprise entre 97% et 99%. Cette technique nécessite une main d'oeuvre importante, et l'emploi de pistons en graphite pour la mise sous charge mécanique renchérit le coût des consommables.

La technique de frittage sous charge par pression de gaz s'opère à une température comprise entre 700°C et 1000°C, et à une pression de 2000 à 2500 bars (200 à 250 MPA). La compacité atteinte est de 99% à 100%, avec des temps de cycles de quelques heures. Cette technique nécessite également une main d'oeuvre importante, et des investissements lourds pour l'installation de fabrication.

Quelle que soit la technique de frittage employée, les étapes classiques de fabrication des segments diamantés par frittage, sont les suivantes :
- mélange de poudres métalliques avec les grains de diamant,
- préformage des produits par pressage à froid provoquant un compactage du mélange,
- assemblage de cellules de frittage,
- frittage libre ou sous charge,
- récupération des produits frittés,
- finition des produits frittés.

La présence du diamant dans les segments diamantés oblige le fabricant à travailler à des températures aussi basses que possible pour éviter la dégradation du diamant. De plus, pour avoir une durée de vie et des qualités de coupe correctes, la porosité résiduelle doit être faible, notamment inférieure à 2%.

Ces deux impératifs entraînent les contraintes suivantes :
- utilisation d'un procédé de frittage avec apport de pression ;
- emploi de poudres fines et coûteuses ayant une granulométrie inférieure à 50 microns, permettant de réduire les conditions de frittage.

Il en résulte un surcoût très important dans la fabrication des segments diamantés en comparaison avec le frittage libre.

Il existe des poudres métalliques utilisées couramment en métallurgie des poudres, peu chères mais plus grossières, notamment supérieures à 50 microns. Ces matériaux ne peuvent pas être utilisés pour les outils diamantés de coupe, fabriqués selon l'une des techniques de frittage précitées, car les température et pression utilisées sont trop faibles pour arriver à réduire correctement la porosité de la structure frittée.

Le document CH 471 641 décrit un procédé de fabrication d'outils diamantés, faisant usage d'une poudre comprimée à froid et contenant un carbure dur et un métal ferreux, la température d'imprégnation étant au moins égale à la température de fusion du cuivre et au plus égale à 1130°C.

FR 1438728 divulgue un procédé de fabrication avec filtrage, forgeage et traitement thermique.

### Objet de l'invention

Un premier objet de l'invention consiste à élaborer un procédé de fabrication de segments diamantés pour outils de coupe, à base de poudres métalliques frittées, permettant d'obtenir une structure homogène de faible porosité résiduelle, et avec une amélioration des caractéristiques mécaniques.

Selon l'invention, ce but est atteint avec le procédé de la revendication 1 par le fait que la préforme subit, après le préfrittage, une opération de forgeage par application en matrice fermée. d'une pression mécanique comprise entre 400 MPA et 700 MPA, le temps d'application de ladite pression étant inférieur à 5 secondes et la température de forgeage étant inférieure à 1000°C. La porosité résiduelle de la pièce forgée est inférieure à 2%.

La matrice est chauffée préalablement à une température comprise entre 200°C et 450°C, et la pression mécanique de forgeage est appliquée à la préforme au moyen d'un poinçon d'une presse. Préférentiellement, la préforme subit, avant le préfrittage, un décirage entre 420°C et 560°C suivi d'un refroidissement sous un courant d'azote.

Un deuxième objet de l'invention concerne l'utilisation d'une poudre métallique bon marché contenant du fer comme liant dans la fabrication de segments diamantés par frittage à chaud, et permettant d'éliminer la porosité pour augmenter la densité de la structure.

Le liant contient à cet effet un mélange de 50% - 100% en poids d'une poudre d'acier renfermant du Fe, C, Ni, et Mo, avec une granulométrie inférieure à 300 microns, et 0% à 50% en poids d'un élément A pouvant être soit du bronze, du carbure de tungstène, ou tout autre élément ou composé destiné à modifier les caractéristiques du liant.

La composition de la poudre d'acier renferme en % de poids :
- 90% - 97% de Fe,
- 0,01% - 0,1% de C,
- 1% - 3% de Ni,
- 0,1% - 0,8% de Mo.
- Eventuellement d'autres éléments tels que le Chrome, le Vanadium ou le Manganèse.

Dans le cas où l'élément A est du bronze, la composition de la poudre d'acier est de préférence en % de poids :
- 1,8% - 2% de Ni,
- teneur en C inférieure à 0,06%,
- 0,5% - 0,6% de Mo,
- 0,15% - 0,25% de Mn,
- Fe balance
avec 20% de bronze. Le bronze de l'élément A est peut avantageusement être du bronze irrégulier 90/10 de granulométrie inférieure à 400 mesh.

Dans le cas où l'élément A est du carbure de tungstène, la composition de la poudre d'acier est de préférence en % de poids :
- 1,5% - 2% de Ni,
- 1,35% - 1,65% de Cu,
- teneur en C inférieure à 0,01%,
- 0,45%- 0,6% de Mo,
avec 10% de carbure de tungstène. Le carbure de tungstène de l'élément A possède une granulométrie inférieure à 35 microns.

### Description sommaire des dessins

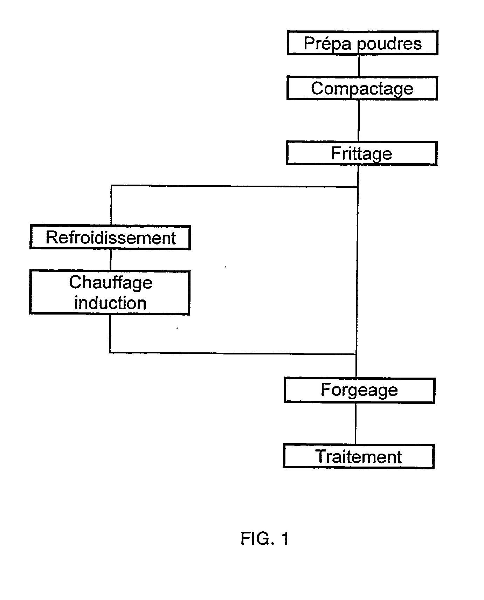

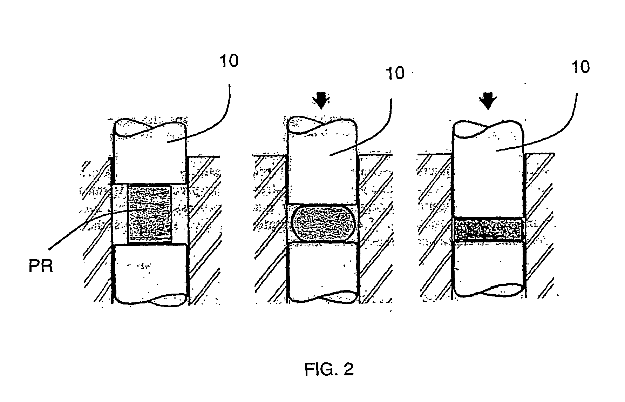

D'autres avantages et caractéristiques ressortiront plus clairement de la description qui va suivre de modes particuliers de réalisation de l'invention donnés à titre d'exemples non limitatifs et représentés aux dessins annexés, dans lesquels :
L a figure 1 est une vue synoptique des étapes du procédé de fabrication selon l'invention ;
L a figure 2 montre une vue schématique en coupe de l'étape de forgeage en matrice fermée et chauffée.

### Description détaillée de l'invention

L'invention concerne l'utilisation de la technique du forgeage pour appliquer une pression élevée sur des pièces préformées en poudres métalliques, portées à hautes températures, permettant de fermer complètement la porosité de ces matériaux. La densification du métal est obtenue par transmission d'énergie dynamique à chaud. Une telle technique de forgeage est particulièrement adaptée à la fabrication de segments diamantés, utilisant des mélanges de poudres métalliques peu coûteuses en remplacement des liants classiques frittés.

On donnera par la suite deux exemples de compositions de poudres métalliques utilisées dans le procédé selon l'invention.

### Exemple 1 : Poudre à base d'acier et de bronze

Mélange de 80 % poids d'une poudre d'acier à base de:
- Fe : >90%
- C : < 0.06 %
- Ni : 1%- 2 %
- Mo :0.5%-0.6%
- Mn : 0.15% - 0.25 %

Granulométrie :
+ 250µ : 0 %
150µ - 250µ < 18 %
45µ - 150µ : balance
<45µ. : 15 - 30 %
et de 20 % poids de bronze irrégulier 90/10 < 400 mesh.

Ce mélange est particulièrement apte à la fabrication d'outils pour la découpe de béton dur. La composition en diamant est variable et adaptée au type de coupe, au diamètre de l'outil, à la puissance de la machine.

### Exemple 2 : Poudre à base d'acier et de carbure de tungstène

Mélange de 90 % en poids d'une poudre d'acier comprenant:
- Fe : >90%
- C : < 0.01 %
- Ni : 1.58% - 1.93 %
- Cu : 1.35% - 1.65 %
- Mo : 0.45% - 0.55 %

Granulométrie :
+ 212 µ : 0 %
180µ - 212µ < 2 %
150 µ- 180µ : balance
150µ.-212µ:<12%
45µ - 150µ : balance
<45µ : 10 - 30 %
et de 10 % en poids de carbure de tungstène, dont la granulométrie est inférieur à 35 µ.

Ce mélange est particulièrement apte à la fabrication d'outils pour la découpe d'asphalte. La composition en diamant est variable et adaptée au type de coupe, au diamètre de l'outil, et à la puissance de la machine. L'ajout d'éléments divers tels que le graphite, des ferro-alliages carburés ou non, le bronze, le cuivre... permet d'obtenir des propriétés rendant ces liants aptes à toute utilisation en découpe à l'outil diamanté.

Les différentes étapes du procédé de fabrication des segments diamantés sont illustrées sur la figure 1 :

### Etape 1 : Préparation et mélange de poudres

Les poudres métalliques selon l'un des deux exemples 1 ou 2, sont d'abord mélangées entre elles et avec les particules de diamant dans une proportion prédéterminée.

### Etape 2 : Compression à froid

Cette opération de compactage par compression à froid du mélange est réalisée de façon classique avec le moule approprié sur une presse hydraulique ou mécanique, afin d'obtenir une préforme manipulable. Les pressions s'échelonnent typiquement de 100 à 600 MPA suivant la nature des poudres métalliques du mélange.

### Etape 3 : Préfrittage

Cette opération est destinée essentiellement à éliminer les résidus organiques de compactage, à désoxyder les pièces, et à assurer un début de frittage.

On procède d'abord à un décirage entre 420°C et 560° C pour une durée de 5 à 30 minutes.

Le préfrittage intervient ensuite dans un four entre 820°C et 900° C pour une durée de 3 à 30 minutes, et sous un flux de gaz réducteur. Le préfrittage est éventuellement réalisé dans la même enceinte que le décirage.

Après refroidissement, les segments préfrittés peuvent recevoir une couche de protection contre l'oxydation. On utilise à cet effet un spray graphite de type D17A. Si les pièces ont été refroidies, on procède finalement à un réchauffage sous gaz neutre ou réducteur à la température de forgeage, par exemple de 870°C.

### Etape 4 : Forgeage pour la fermeture des porosités

L'opération de forgeage est réalisée par l'application d'une pression en matrice fermée, chauffée préalablement entre 200°C et 450°C, et lubrifiée. La presse utilisée peut être une presse à vis, mécanique ou hydraulique.

La pression mécanique est appliquée sur la pièce PR préfrittée par l'intermédiaire d'un poinçon 10, comme illustré à la figure 2. Les pressions varient suivant les conditions de travail et le matériau. Pour les exemples précités, les valeurs sont les suivantes :
- pression de forgeage entre 400 MPA à 700 MPA,
- température de forgeage effective à l'entrée de la matrice de l'ordre de 750°C - 850°C,
- temps d'application de la pression inférieur à 5 secondes.

### Etape 5 : Traitements ultérieurs

Les pièces forgées sont ensuite sablées et refroidies, avec éventuellement un traitement thermique, et un usinage final.

L'utilisation de la technique de forgeage selon l'invention est moins coûteuse que le frittage sous charge mécanique classique, car elle permet d'utiliser des poudres économiques plus grossières, plus ou moins supérieures à 50 microns, tout en conservant une température relativement modérée de l'ordre de 750°C à 950°C pour éviter la dégradation du diamant. De plus, les propriétés mécaniques sont considérablement améliorées grâce à l'obtention d'une compacité supérieure à 98%.

Le passage d'une densité de 7.6 à 7.85 (100 % de densité) donne 40 % de gain en résistance à la traction, tandis que l'allongement à la rupture est multiplié par 5. La réduction de la porosité permet de multiplier la résilience par 6, alors qu'elle varie peu entre 95 % et 98 % de compacité obtenue lors d'un frittage classique.

Le mélange de poudres selon l'exemple 1 ou 2 précité peut ainsi être facilement forgé, et peut remplacer avantageusement les liants classiques frittés pour réaliser des segments diamantés d'outils de coupe.

La préforme est de préférence manipulée dans un flux de gaz pour la protection contre l'oxydation.

Le mélange de poudres contient 50% - 100% en poids d'une poudre d'acier renfermant du Fe, C, Ni, et Mo, avec une granulométrie inférieure à 300 microns.

En plus, la poudre d'acier peut contenir 0,1% -0,8% de Mn, ou 1 % à 2% de Cu.

## Revendications

1. Procédé de fabrication par frittage d'un segment diamanté pour un outil de coupe, consistant à assurer successivement :
- un mélange de poudres métalliques avec des particules de diamant,
- un préformage par compression à froid du mélange pour obtenir une préforme manipulable,
- et un préfrittage à chaud de la préforme pour éliminer les résidus de compactage, et désoxyder la préforme tout en assurant un débu de frittage,
dans le quel la préforme subit, après le préfrittage, une opération de forgeage par application en matrice fermée d'une pression mécanique comprise entre 400 MPA et 700 MPA, le temps d'application de ladite pression étant inférieur à 5 secondes, et la température de forgeage étant inférieure à 1000°C.

2. Procédé de fabrication selon la revendication 1, **caractérisé en ce que** la matrice est chauffée préalablement à une température comprise entre 200°C et 450°C.

3. Procédé de fabrication selon la revendication 1, **caractérisé en ce que** la pression mécanique de forgeage est appliquée à la préforme par un ensemble matrice - poinçon.

4. Procédé de fabrication selon la revendication 1, **caractérisé en ce que** la préforme subit, avant le préfrittage, un décirage entre 420°C et 560°C.

5. Procédé de fabrication selon la revendication 4, **caractérisé en ce que** la préforme est recouverte après refroidissement d'une couche de graphite pour la protection contre l'oxydation.

6. Procédé de fabrication selon la revendication 4, **caractérisé en ce que** la préforme est manipulée dans un flux de gaz pour la protection contre l'oxydation.

7. Procédé de fabrication selon l'une des revendications 1 à 6, **caractérisé en ce que** le mélange de poudres métalliques contient:
- 50% - 100% en poids d'une poudre d'acier renfermant du Fe, C, Ni, et Mo, avec une granulométrie inférieure à 300 microns,
- et 0% à 50% en poids d'un élément A pouvant être soit du bronze, du carbure de tungstène, ou tout autre élément destiné à modifier les caractéristiques de la matrice métallique.

8. Procédé de fabrication selon la revendication 7, **caractérisé en ce que** la composition de la poudre d'acier est en % de poids :
- 90% - 97% de Fe,
- 0,01% - 0,1% de C,
- 1% - 3% de Ni,
- 0,1%-0,8% de Mo.

9. Procédé de fabrication selon la revendication 8, **caractérisé en ce que** la poudre d'acier contient de plus 0,1% - 0,8% de Mn.

10. Procédé de fabrication selon la revendication 9, **caractérisé en ce que** la composition de la poudre d'acier est en % de poids :
- 1,8% - 2% de Ni,
- teneur en C inférieure à 0,06%,
- 0,5% - 0,6% de Mo,
- 0,15% - 0,25% de Mn,
- Fe balance
avec 20% de bronze.

11. Procédé de fabrication selon la revendication 8, **caractérisé en ce que** la composition de la poudre d'acier contient 1% à 2% de Cu.

12. Procédé de fabrication selon la revendication 11, **caractérisé en ce que** la composition de la poudre d'acier est en % de poids :
- 1,5%-2% de Ni,
- 1,35% - 1,65% de Cu,
- teneur en C inférieure à 0,01%,
- 0,45%- 0,6% de Mo,
avec 10% de carbure en tungstène.

13. Procédé de fabrication selon la revendication 10, **caractérisé en ce que** le bronze de l'élément A est du bronze irrégulier 90/10.

14. Procédé de fabrication selon la revendication 12, **caractérisé en ce que** le carbure de tungstène de l'élément A possède une granulométrie inférieure à 35 microns.

15. Procédé de fabrication selon la revendication 1, **caractérisé en ce que** la température de forgeage est comprise de préférence entre 750°C et 900°C.

16. Procédé de fabrication selon la revendication 1, **caractérisé en ce que** la porosité résiduelle de la pièce forgée est inférieure à 2%.

## Patentansprüche

1. Verfahren zur Herstellung eines Diamantsegments für ein Schneidwerkzeug durch Sintern, das in folgenden aufeinanderfolgenden Schritten besteht:
- Mischen von Pulvermetallen mit Diamantpartikeln,
- Vorformen des Gemischs durch Kaltpressen, um einen bearbeitbaren Vorformling zu erhalten,
- und eine Vorsinterung des Vorformlings, um die Kompaktierungsreste zu entfernen und den Vorformling zu desoxidieren und einen Sinterungsbeginn sicherzustellen,
bei dem der Vorformling nach der Vorsinterung einen Schmiedevorgang durchläuft, und zwar durch Ausübung eines mechanischen Drucks zwischen 400 MPA und 700 MPA in geschlossenem Gesenk, wobei die Dauer der Ausübung dieses Drucks unter 5 Sekunden und die Umformungstemperatur unter 1000°C liegen.

2. Herstellungsverfahren nach Anspruch 1, **dadurch gekennzeichnet, dass** das Gesenk auf eine Temperatur zwischen 200°C und 450°C vorerhitzt wird.

3. Herstellungsverfahren nach Anspruch 1, **dadurch gekennzeichnet, dass** der mechanische Druck des Schmiedevorgangs auf den Vorformling mittels einer Einheit aus Gesenk und Stempel ausgeübt wird.

4. Herstellungsverfahren nach Anspruch 1, **dadurch gekennzeichnet, dass** der Vorformling vor der Vorsinterung bei einer Temperatur zwischen 420°C und 560°C einem Entwachsen unterzogen wird.

5. Herstellungsverfahren nach Anspruch 4, **dadurch gekennzeichnet, dass** der Vorformling nach dem Abkühlen mit einer Graphitschicht zum Schutz gegen Oxidierung überzogen wird.

6. Herstellungsverfahren nach Anspruch 4, **dadurch gekennzeichnet, dass** der Vorformling zum Schutz gegen Oxidierung in einem Gasstrom gehandhabt wird.

7. Herstellungsverfahren nach einem der Ansprüche 1 bis 6, **dadurch gekennzeichnet, dass** das Metallpulvergemisch enthält:
- 50 Gew.-% - 100 Gew.-% eines Stahlpulvers, das Fe, C, Ni und Mo enthält, bei einer Korngröße von unter 300 Mikron,
- und 0 Gew.-% bis 50 Gew.% eines Elements A, das entweder Bronze, Wolframkarbid oder ein beliebiges anderes Element sein kann und dazu bestimmt ist, die charakteristischen Eigenschaften des Metallgesenks zu verändern.

8. Herstellungsverfahren nach Anspruch 7, **dadurch gekennzeichnet, dass** die Zusammensetzung des Stahlpulvers wie folgt in Gew.% ist:
- 90 % - 97 % Fe,
- 0,01 %-0,1 % C,
- 1 %-3%Ni,
- 0,1 % - 0,8 % Mo.

9. Herstellungsverfahren nach Anspruch 8, **dadurch gekennzeichnet, dass** das Stahlpulver ferner 0,1 % - 0,8 % Mn enthält.

10. Herstellungsverfahren nach Anspruch 9, **dadurch gekennzeichnet, dass** die Zusammensetzung des Stahlpulvers wie folgt in Gew.% ist:
- 1,8 %-2 % Ni,
- C-Gehalt unter 0,06%,
- 0,5 %- 0,6 % Mo,
- 0,15 % - 0,25 % Mn,
- Fe-Balance,
mit 20 % Bronze.

11. Herstellungsverfahren nach Anspruch 8, **dadurch gekennzeichnet, dass** die Zusammensetzung des Stahlpulvers 1% bis 2 % Cu enthält.

12. Herstellungsverfahren nach Anspruch 11, **dadurch gekennzeichnet, dass** die Zusammensetzung des Stahlpulvers wie folgt in Gew.% ist:
- 1,5 % - 2 % Ni,
- 1,35%-1,65 % Cu,
- C-Gehalt unter 0,01 %,
- 0,45 % - 0,6 % Mo,
mit 10 % Wolframkarbid.

13. Herstellungsverfahren nach Anspruch 10, **dadurch gekennzeichnet, dass** die Bronze des Elements A spratzige Bronze 90/10 ist.

14. Herstellungsverfahren nach Anspruch 12, **dadurch gekennzeichnet, dass** das Wolframkarbid des Elements A eine Korngröße von unter 35 Mikron hat.

15. Herstellungsverfahren nach Anspruch 1, **dadurch gekennzeichnet, dass** die Schmiedetemperatur vorzugsweise zwischen 750°C und 900°C beträgt.

16. Herstellungsverfahren nach Anspruch 1, **dadurch gekennzeichnet, dass** die Restporosität des Formstücks unter 2 % liegt.

## Claims

1. Method of producing a diamond segment for a cutting tool by sintering, consisting in successively performing:
- mixing of metal powders with diamond particles,
- preforming of the mixture by cold compression to obtain a handleable preform,
- and hot presintering of the preform to eliminate the compaction residues and de-oxidize the preform while performing a beginning of sintering,
wherein, after presintering, the preform is subjected to a forging operation by closed die application of a mechanical pressure comprised between 400 MPA and 700 MPA, the application time of said pressure being less than 5 seconds and the forging temperature being less than 1000°C.

2. Method of producing according to claim 1, **characterized in that** the die is previously heated to a temperature comprised between 200°C and 450°C.

3. Method of producing according to claim 1, **characterized in that** the mechanical forging pressure is applied to the preform by a die - stamp assembly.

4. Method of producing according to claim 1, **characterized in that**, before presintering, dewaxing of the preform is performed between 420°C and 560°C.

5. Method of producing according to claim 4, **characterized in that** the preform is covered after cooling by a graphite layer for protection against oxidation.

6. Method of producing according to claim 4, **characterized in that** the preform is handled under a gas flow for protection against oxidation.

7. Method of producing according to one of the claims 1 to 6, **characterized in that** the mixture of metal powders contains:
- 50% - 100% in weight of a steel powder containing Fe, C, Ni, and Mo, with a granulometry of less than 300 microns,
- and 0% to 50% in weight of an element A able to be either bronze, tungsten carbide, or any other element designed to modify the characteristics of the metal die.

8. Method of producing according to claim 7, **characterized in that** the composition of the steel powder is in % of weight:
- 90% - 97% of Fe,
- 0.01%-0.1% of C.
- 1%-3% of Ni.
- 0.1%-0.8% of Mo.

9. Method of producing according to claim 8, **characterized in that** the steel powder also contains 0.1 % - 0.8% of Mn.

10. Method of producing according to claim 9, **characterized in that** the composition of the steel powder is in % of weight:
- 1.8% - 2% of Ni,
- C content less than 0.06%,
- 0.5%-0.6% of Mo,
- 0.15%-0.25% of Mn,
- Fe balance
with 20% of bronze.

11. Method of producing according to claim 8, **characterized in that** the composition of the steel powder contains 1 % to 2% of Cu.

12. Method of producing according to claim 11, **characterized in that** the composition of the steel powder is in % of weight:
- 1,5% - 2% of Ni,
- 1,35% - 1.65% of Cu,
- C content less than 0.01%,
- 0.45% - 0.6% of Mo,
with 10% of tungsten carbide.

13. Method of producing according to claim 10, **characterized in that** the bronze of the element A is irregular 90/10 bronze.

14. Method of producing according to claim 12, **characterized in that** the tungsten carbide of the element A has a granulometry of less than 35 microns.

15. Method of producing according to claim 1, **characterized in that** the forging temperature is preferably comprised between 750°C and 900°C.

16. Method of producing according to claim 1, **characterized in that** the residual porosity of the forged part is less than 2%.
